# EUROPÄISCHE PATENTSCHRIFT

(11) **EP 2 210 701 B1**
(45) Veröffentlichungstag und Bekanntmachung des Hinweises auf die Patenterteilung: **28.09.2011**
(21) Anmeldenummer: 09151408.3
(22) Anmeldetag: 27.01.2009
(51) Int. Cl.: B23Q 7/00, B65G 17/22, B65G 17/32

(54) **Lineares Fertigungssystem**
Linear production system
Système de fabrication linéaire

(43) Veröffentlichungstag der Anmeldung: 28.07.2010
(73) Patentinhaber: Weeke Bohrsysteme GmbH, 33442 Herzebrock-Clarholz (DE)
(72) Erfinder: Voss, Hugo, 33449 Langenberg (DE)
(74) Vertreter: HOFFMANN EITLE

(56) Entgegenhaltungen:
- EP-A- 0 223 999
- DE-U1- 29 802 181
- FR-A- 2 645 464

## Beschreibung

### Gebiet der Erfindung

Die vorliegende Erfindung betrifft ein Fertigungssystem für im Wesentlichen plattenförmige Werkstücke, die bevorzugt zumindest abschnittsweise aus Holz, Holzwerkstoffen, Kunststoff, Metall, oder einer Kombination hiervon bestehen. Die Bearbeitungsmöglichkeiten der vorliegenden Erfindung betreffen im Besonderen spanende Bearbeitung wie Bohren oder Fräsen, jedoch auch nicht spanende Bearbeitung wie das Anbringen von Beschlägen oder ähnlichen Funktionsteilen.

### Stand der Technik

Im Stand der Technik sind Fördereinrichtungen für plattenförmige Werkstücke bekannt, bei denen die Werkstücke an einem Ende einer Fördereinrichtung mittels einer Greifeinrichtung gegriffen werden, und dann zu verschiedenen Bearbeitungsstationen befördert werden. Diese Greifeinrichtungen greifen in einer vertikalen Richtung das Werkstück an und nehmen dieses auf. Wenn ein Werkstück in den Bearbeitungsbereich einer Bearbeitungsstation gefördert wurde, wird es dort abgelegt und durch eine Einspanneinrichtung gespannt. Sobald die Bearbeitung beendet ist, nimmt die Greifeinrichtung das Werkstück wieder auf und fördert es weiter auf der Bearbeitungsstraße.

Weiter ist das Dokument DE 141 241 A1 als Stand der Technik bekannt, welches eine Ausricht- und Zuführeinrichtung für plattenförmige Werkstücke offenbart. In einer solchen Vorrichtung sind Mitnehmer an einer Vorschubkette angebracht, wobei die Mitnehmer jeweils paarweise mit Abstand zueinander quer zur Vorschubrichtung auf der Förderkette angeordnet und in ihrer Position in Vorschubrichtung justierbar sind.

Der erstgenannte Stand der Technik hat den Nachteil, dass unnötige Nebenzeiten entstehen, wenn ein Werkstück von einer Bearbeitungsstation zur nächsten und/oder zu einer Ausförderstation gefördert wird. Weitere Nebenseiten entstehen dadurch, dass die Einfördereinrichtung ungenutzt einen langen Weg zum Ort der Beschickung und einen zusätzlichen Weg zu einem weiteren Werkstück durchführen muss. Oft müssen auch in diesem Fall eventuelle weitere Fördereinrichtungen oder Bearbeitungswerkzeuge aus dem Förderraum der ersten rückzuführenden Fördereinrichtung entfernt werden.

Der zweite genannte Stand der Technik gemäß dem Dokument DE 141 241 A1 ist eine spezialisierte Vorrichtung, die nicht uneingeschränkt für verschiedene Bearbeitungsvorgänge genutzt werden kann. So wird in diesem Dokument lediglich eine stirnseitige Kantenbearbeitung bei einem vertikal ausgerichteten Werkstück bereitgestellt. Weiter ist eine exakte Ausrichtung eines Werkstücks, abgesehen von der Stirnfläche, im Bezug auf das Bearbeitungswerkszeug in diesem Stand der Technik nicht möglich. Die Ausrichtung findet also nur entlang der Förderrichtung statt.

Als Stand der Technik ist das Dokument DE 298 02 181 U1 bekannt. In diesem Dokument wird eine Vorrichtung zur Bereitstellung von Werkstücken an aufeinanderfolgenden Bearbeitungsstationen offenbart, die entlang einer Reihe angeordnet sind, wobei die Vorrichtung mit einem Stetigförderer angetrieben wird. Zur Aufnahme der Werkstücke sind Werkstückträger vorgesehen, an denen Spanneinrichtungen angebracht werden können.

### Inhalt der Erfindung

Demnach ist es Aufgabe der Erfindung, ein Fertigungssystem zum Bearbeiten von im Wesentlichen plattenförmigen Werkstücken bereitzustellen, das die oben genannten Probleme löst. Darüber hinaus soll ein Fertigungssystem bereitgestellt werden, das eine große Flexibilität aufweist, und mit dem eine hohe Taktfrequenz bei gutem Preis-Leistungsverhältnis erreicht werden kann.

Dieses Ziel wird erfindungsgemäß durch ein Fertigungssystem gemäß Anspruch 1 sowie ein Verfahren gemäß Anspruch 10 erreicht. Besonders vorteilhafte Weiterbildungen der vorliegenden Erfindung sind Gegenstand der weiteren abhängigen Ansprüche.

Grundgedanke ist es, ein Fertigungssystem für plattenförmige Werkstücke aus beispielsweise Holz bereitzustellen, bei dem ein Werkstück mittels einer Greifeinrichtung gegriffen und sukzessive zu modular in einer Richtung angeordneten Bearbeitungsstationen in dieser einen Aufspannung entlang einer an einem Grundkörper angebrachten Führungseinrichtung gefördert werden kann, und erst am Ende der Bearbeitungsstrecke aus dieser Spannung gelöst werden soll.

Erfindungsgemäß wird ein Fertigungssystem gemäß Anspruch 1 bereitgestellt. Das beanspruchte Fertigungssystem hat den Vorteil, dass dieses bei geringem Platzbedarf im Baukastenprinzip aufgebaut ist. Somit wird eine hohe Flexibilität gewährleistet. Eine preiswerte Ausführung des Fertigungssystems kann nach den Wünschen des Kunden beliebig um weitere Bearbeitungsstationen erweitert werden. Insgesamt stellt das erfindungsgemäße Fertigungssystem eine Bearbeitungsmaschine mit gutem Preis-Leistungsverhältnis bereit.

Beim erfindungsgemäßen Fertigungssystem sind die Greifeinrichtungen unabhängig voneinander bewegbar. Somit findet ein Datenaustausch zwischen speziell einer der Greifeinrichtungen und einer Steuereinheit statt, wobei die Steuereinheit die Greifeinrichtungen einzeln ansteuern und aufeinander abstimmen kann. Somit können die Greifeinrichtungen mit den aufgenommenen Werkstücken entsprechend den einzelnen Bearbeitungsstationen bzw. Bearbeitungsschritten von Bearbeitungsstation zu Bearbeitungsstation bewegt werden.

Zudem wird eine hohe Taktfrequenz dadurch erreicht, dass die Greifeinrichtung ein Werkstück einmal aufnimmt und auch während der Bearbeitung hält und stützt. Somit wird mehrfaches Umspannen überflüssig, was wiederum zur Erhöhung des Durchsatzes führt. Auch werden auf diese Weise Positionierungsfehler, die durch wiederholtes Greifen entstehen können, vermieden. Das Werkstück bleibt also während der gesamten Bearbeitung in der ursprünglichen Ausrichtung.

Weiter ist es bevorzugt, dass die Greifeinrichtung zwei in einer horizontalen Ebene angeordnete Greifzangen aufweist, die ein Werkstück in einer Greifbewegung aufnehmen und halten können. Greifbewegung bedeutet in diesem Zusammenhang, dass sich die beiden Greifzangen aufeinander zu bewegen, und somit ein Werkstück zwischen diesen eingespannt wird. Die Ausrichtung der Greifeinrichtungen in der horizontalen Ebene hat den Vorteil, dass ein Werkstück auch während der Bearbeitung sicher und im Wesentlichen ohne Durchbiegung in der horizontalen Ebene gehalten werden kann. Somit kann eine hochwertige Bearbeitung und entsprechendes Fördern des Werkstücks in ein und derselben Aufspannung gewährleistet werden.

Weiter kann sich das Fertigungssystem dadurch auszeichnen, dass die Bearbeitungsstationen austauschbar angeordnet sind. Somit wird ein modulares System zur Verfügung gestellt, das entsprechen den Kundenanforderungen angepasst werden kann. Besonders bevorzugt ist es dabei, wenn die Bearbeitungsstationen selbst bewegt werden können. Auf diese Weise kann eine zusätzliche Bearbeitungsstation- wenn benötigt - in das Fertigungssystem integriert werden. Folglich können Bearbeitungsstationen leicht zwischen mehreren Fertigungssystemen ausgetauscht werden.

Weiter ist es bevorzugt, dass eine berührungslose Energie-und Datenübertragung zu jeder der Greifeinrichtungen (32) gewährleistet wird. Hierzu ist jede Greifeinrichtung beispielsweise mit einer Art Klaue versehen, die entlang einer am Grundkörper angebrachten, und parallel zur Führungseinrichtung angeordneten Schiene geführt wird. Auf diese Weise kann zu jedem Zeitpunkt jede der umlaufenden Greifeinrichtungen (32) angesteuert, und auch mit Strom versorgt werden.

Gemäß einer weiteren bevorzugten Ausführungsform ist der Abstand zwischen den Greifeinrichtungen variabel einstellbar. Damit können die Greifeinrichtungen zueinander so verstellt werden, dass die Förderstrecke entsprechend der Anzahl der Bearbeitungsstation bzw. dem Abstand zwischen diesen angepasst wird.

Weiter ist bevorzugt vorgesehen, dass eine Beschickungs- und eine Bearbeitungsstation in einer Längsrichtung der Führungseinrichtung vorhanden sind. Mit Hilfe dieser Beschickungs- und Ausgabestation können Werkstücke entweder manuell, oder auch maschinell zugeführt und wieder ausgefördert werden. An dieser Stelle ist das Fertigungssystem wiederum an die Kundenwünsche anpassbar. Während in kleineren Betrieben oder auch bei einem kleineren Fertigungssystem eine manuelle Zuführung sowie manuelle Beschickung eines Werkstücks kostengünstig durchführbar sein kann, ist bei größeren Fertigungssystemen (also mit vielen Bearbeitungsstationen) eine maschinelle Förderung eines Werkstücks unter Umständen besser geeignet.

Bevorzugt weist die Führungseinrichtung eine Bearbeitungsstrecke und eine Rückführstrecke zur Rückführung von Greifeinrichtungen auf, wobei die Bearbeitungsstrecke und die Rückführstrecke im Wesentlichen parallel zueinander angeordnet sind. Besonders bevorzugt ist es jedoch, dass an der genannten Rückführstrecke ebenfalls Bearbeitungsstationen vorgesehen sind, so dass die Rückführstrecke ebenfalls als eine Bearbeitungsstrecke verwendet werden kann. Gleichzeitig kann eine Beschickungsstation in diesem Fall auch als Entnahmestation fungieren.

Die Anordnung, bei der die Rückführstrecke gleichzeitig eine Bearbeitungsstrecke ist, wird auch als Duplex-System bezeichnet. Mit ihr kann eine besonders kompakte und platzsparende Variante des Fertigungssystems gemäß der vorliegenden Erfindung bereitgestellt werden.

Jedoch kann auch die einseitige Variante des vorliegenden Fertigungssystems dann platzsparend angeordnet werden, wenn beispielsweise die Zangen bei der Rückführung nicht mehr in der horizontalen Richtung ausgerichtet sind, sondern nach unten oder oben geklappt werden. Dann könnte ein solches Fertigungssystem direkt an einer Wand angeordnet werden.

Zum Antrieb der Greifeinrichtungen können verschiedene Antriebstechniken eingesetzt werden. Beispiele hierfür sind ein Linearmotor, ein Zahnriemen, ein Zahnstangengetriebe oder auch ein alternativer Antrieb.

Weiter ist ein Verfahren Gegenstand der vorliegenden Erfindung, das im Wesentlichen die gleichen Vorteile wie die zuvor genannten aufweist.

### Kurze Beschreibung der Zeichnungen

Nachfolgend wird anhand mehrerer Ausführungsbeispiele die vorliegende Erfindung beispielhaft erläutert.
- Fig. 1: ist eine perspektivische Ansicht, die eine Ausführungsform des erfindungsgemäßen Fertigungssystems mit mehreren Bearbeitungsstationen darstellt
- Fig. 2: ist eine Seitenansicht des in Fig. 1 dargestellten Fertigungssystems
- Fig. 3: ist eine Seitenansicht des in Fig. 2 dargestellten Fertigungssystems von der linken Seite her betrachtet (in einer Ebene senkrecht zur Förderrichtung)
- Fig. 4: ist eine Draufsicht einer Ausführungsform des vorliegenden Fertigungssystems, bei der eine Bearbeitungsstrecke und eine Rückführstrecke vorgesehen sind
- Fig. 5: ist eine Draufsicht einer weiteren Ausführungsform des erfindungsgemäßen Fertigungssystems, bei der zwei parallel angeordnete Bearbeitungsstrecken angeordnet sind (Duplex-System)

### Detaillierte Beschreibung der bevorzugten Ausführungsformen

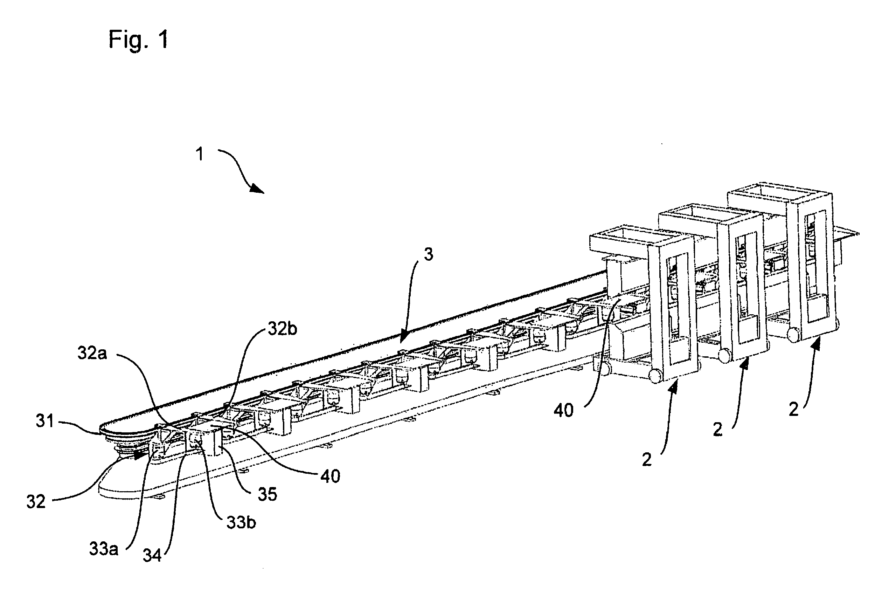

In Fig. 1 ist eine Ausführungsform des erfindungsgemäßen Fertigungssystems 1 in perspektivischer Ansicht dargestellt. Das Fertigungssystem 1 weist einen Grundkörper 3 auf, der sich in einer Längsrichtung erstreckt. Am Grundkörper 3 ist eine Führungseinrichtung 31 in einem oberen Bereich angeordnet, die zwei parallel angeordnete, voneinander beabstandete Strecken aufweist, die wiederum an den Endbereichen des Grundkörpers 3 über halbkreisförmige Streckenabschnitte miteinander verbunden sind. Somit ist die Führungseinrichtung 31 als eine geschlossene, umlaufende Führungsstrecke ausgebildet.

Weil die Führungseinrichtung 31 als eine geschlossene Führungsstrecke ausgebildet ist, kann sich eine an der Führungseinrichtung 31 geführte Greifeinrichtung 32 umlaufend entlang der Führungseinrichtung 31 in horizontaler Richtung bewegen. Wie in Fig. 1 zu erkennen, weist das erfindungsgemäße Fertigungssystem 1 eine Vielzahl von Greifeinrichtungen 32 auf, die an der Führungseinrichtung 31 in einer horizontalen Richtung geführt werden.

Eine Greifeinrichtung 32 wiederum umfasst zwei Zangen 32a, 32b, die sich in einer horizontalen Richtung erstrecken. Mit diesen beiden Zangen 32a, 32b kann ein Werkstück 40 in einer horizontalen Ebene aufgenommen und gehalten werden. Dabei liegt ein aufgenommenes Werkstück 40 zum einen an Innenflächen der Zangen 32a, 32b an, zum anderen an einem Absatz, der an jeder der Innenflächen der Zangen 32a, 32b vorgesehen ist, und eine Fläche in horizontaler Richtung bereitstellt. Somit wird ein Werkstück 40 in horizontaler Richtung geklemmt und in vertikaler Richtung gestützt.

Die Greifeinrichtung 32 weist weiter Antriebseinrichtungen 33a, 33b auf, welche die Greifbewegung der Greifzangen 32a, 32b zueinander antreiben. Im vorliegenden Beispiel sind die Antriebseinrichtungen 32a, 32b als Servomotoren ausgeführt. Zur Bewegung der Greifzangen 32a, 32b sind an der Greifeinrichtung 32 ein oder mehrere Führungselemente 34 in einer Förderrichtung vorgesehen. Weiter weist eine Greifeinrichtung 32 eine Antriebs- und Steuereinheit 35 auf, um die Bewegung der Greifeinrichtung zu gewährleisten. Die Greifeinrichtungen können auch durch umlaufende Zugelemente wie Kette/Zahnriemen mit im Grundrahmen zentral angeordneten Antriebsmotoren linear bewegt und positioniert werden. Entlang der sich in eine Längsrichtung erstreckenden Führungseinrichtung 31 sind in der Nähe des Grundkörpers 3 mehrere Bearbeitungsstationen 2 vorgesehen. Im vorliegenden Ausführungsbeispiel sind dies drei, wobei jedoch betont sein soll, dass eine beliebig hohe Anzahl von Bearbeitungsstationen 2 vorhanden sein kann. Zumindest sollten jedoch zwei Bearbeitungsstationen 2 nebeneinander angeordnet sein.

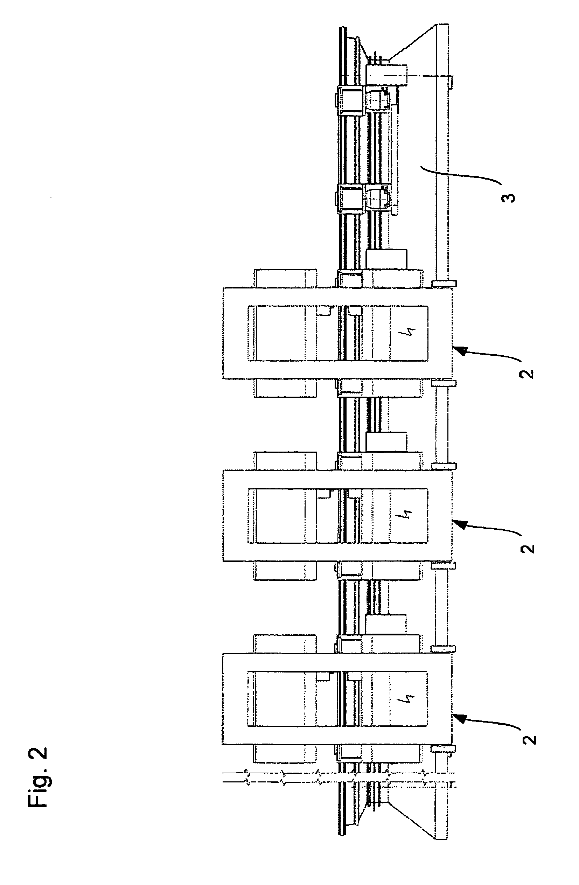

In Fig. 2 ist die Längsausrichtung des erfindungsgemäßen Fertigungssystems 1 zu erkennen. Ein Werkstück 40 wird entlang der mit dem Pfeil angedeuteten Richtung von Bearbeitungsstation 2 zu Bearbeitungsstation 2 gefördert und in einer solchen bearbeitet (hier im Uhrzeigersinn). Die Umlaufrichtung im Uhrzeigersinn sei jedoch für die vorliegende Erfindung nicht einschränkend, sondern nur beispielhaft. Selbstverständlich ist auch ein Umlauf gegen den Uhrzeigersinn möglich.

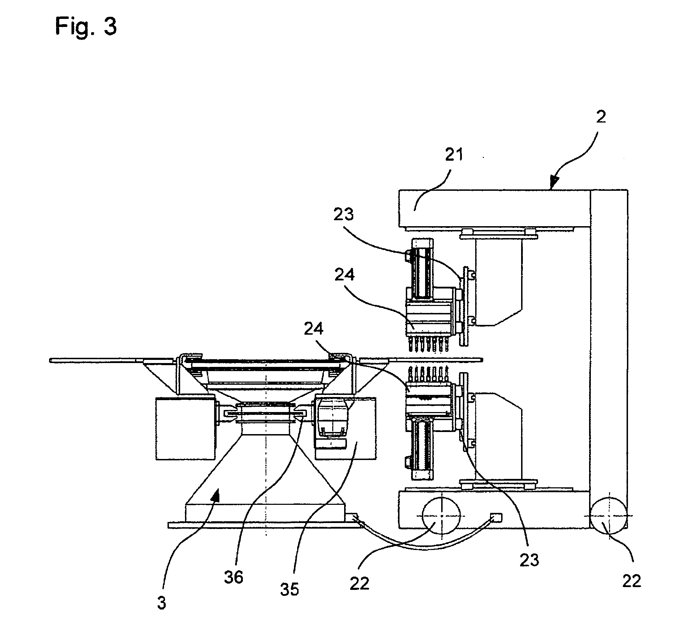

Fig. 3 stellt eine weitere Seitenansicht dar, in Fig. 2 von der linken Seite aus betrachtet. Eine Bearbeitungsstation 2 weist dabei einen Rahmen 21 auf, an welchem Rollen angebracht sind. Es sei jedoch betont, dass Rollen 22 nur eine Ausführungsform einer Bearbeitungsstation sind. Um die erfindungsgemäßen Ziele zu erreichen, muss eine Bearbeitungsstation 2 keineswegs über diese verfügen. Auch kann eine Bearbeitungsstation 2 am Grundelement 3 fixiert werden.

Am Rahmen 21 sind Schienen 23 in einer vertikalen Richtung angebracht, an welchen Schienen 23 wiederum Bearbeitungsaggregate 24 befestigt sind. Im vorliegenden Ausführungsbeispiel sind die Bearbeitungsaggregate 24 zwei oder mehrere konträr zueinander in vertikaler Richtung ausgerichtete Bohraggregate. Es sei jedoch betont, dass nicht nur spanende, sondern auch nicht spanende Bearbeitungswerkzeuge/-aggregate an einer Bearbeitungsstation 2 angebracht sein können. Auch ist es nicht zwingend, die Bearbeitungsaggregate 24 in einer vertikalen Richtung auszurichten. Auch eine Ausrichtung in horizontaler Richtung oder einer weiteren geneigten Richtung ist möglich. Auch kann es sich bei den genannten Bearbeitungswerkzeugen/-aggregaten um im Raum simultan bewegte Bearbeitungsaggregate handeln. In diesem Zusammenhang sei weiter beispielsweise ein Kantenbearbeitungswerkzeug aufgeführt.

Die Bohraggregate 24 weisen eine Vielzahl von Bohrwerkzeugen auf, um das in einer horizontalen Ebene ausgerichtete Werkstück 40 mit Bohrungen zu versehen. Weiter ist in Fig. 3 ein an der Greifeinrichtung 32 angebrachtes Zangenelement 36 zu erkennen. Dieses dient der berührungslosen Energie- und Datenübertragung vom Grundkörper 3 her. Auf diese Weise werden zu jedem Zeitpunkt die zum Antrieb nötige Energie, sowie die zur Steuerung nötigen Informationen bereitgestellt.

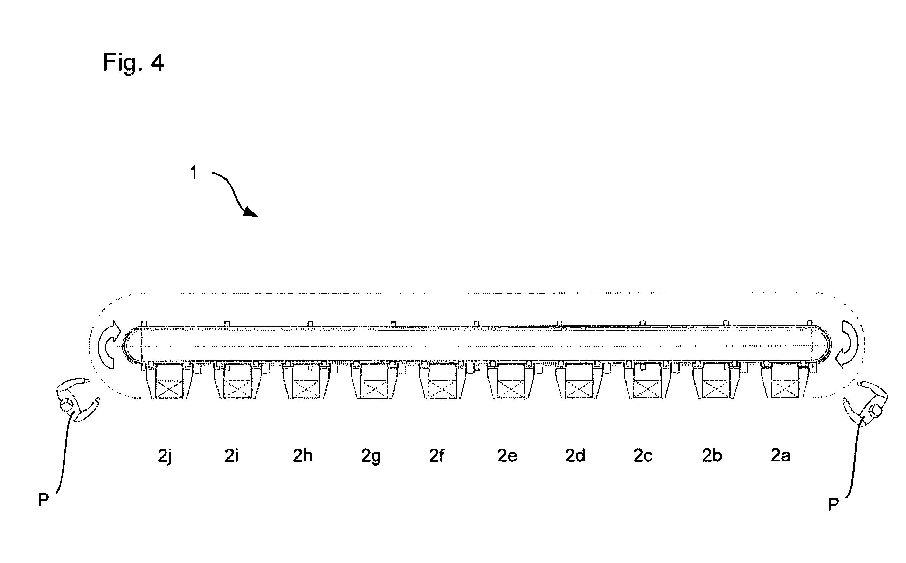

In Fig. 4 ist das erfindungsgemäße Fertigungssystem in einer Draufsicht gezeigt. Dabei weist das Fertigungssystem eine Bearbeitungsstrecke, und eine parallel dazu angeordnete Rückführstrecke auf. An den Enden des längs ausgerichteten Fertigungssystems ist schematisch eine Bedienperson P abgebildet. Diese kann ein Werkstück beschicken, und am Ende der Bearbeitungsstrecke wieder entnehmen. Allerdings sei angemerkt, dass die Beschickung und Entnahme auch maschinell durchgeführt werden kann. Die Umlaufrichtung des Fertigungssystems 1 in Fig. 4 ist durch die beiden Pfeile im halbkreisförmig ausgebildeten Übergang zwischen Bearbeitungsstrecke und Rückführstrecke angedeutet. Ein Werkstück 40 wird in der Bearbeitungsstrecke in Fig. 4 somit von rechts nach links geführt. In der beispielhaft dargestellten Ausführungsform sind eine Vielzahl von Bearbeitungsstationen 2a-2j vorgesehen. 2a ist dabei die Beschickungsstation, wobei 2j eine Entnahmestation darstellt. Weiter sind die Bearbeitungsstationen 2a, 2b Bohrstationen, die Bearbeitungsstationen 2c, 2d Frässtationen, die Bearbeitungsstationen 2f-2h Montagestationen für z. B. Sonderbeschläge, und die Station 2i eine Reinigungsstation. In der Entnahmestation 2j kann eine Messstation integriert sein, um die Qualität der bearbeiteten Werkstücke zu überwachen.

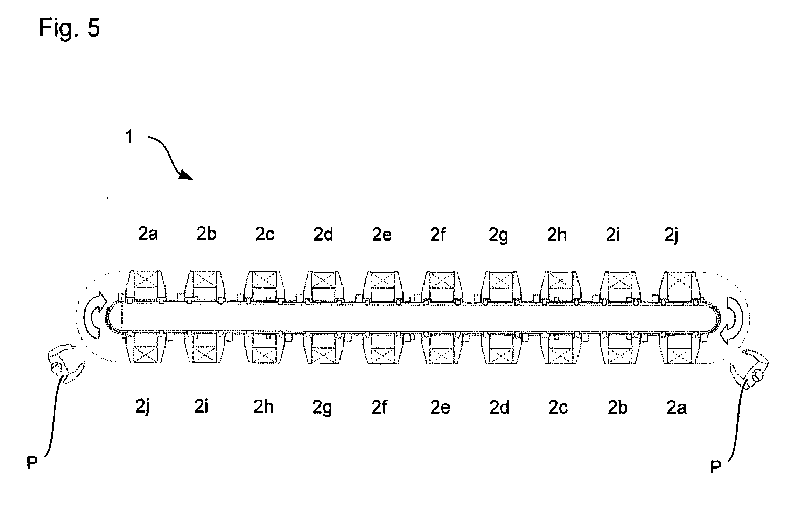

Fig. 5 zeigt die sogenannte Duplex-Variante des erfindungsgemäßen Fertigungssystems. Dabei ist die Rückführstrecke von der in der Fig. 4 gezeigten Variante ebenfalls als Bearbeitungsstrecke ausgebildet. Somit wird das vorhandene Grundelement 3 beidseitig als Bearbeitungsstrecke genutzt. Das Bedienpersonal P führt also zwei Arbeitsgänge gleichzeitig aus, nämlich das Beschicken und das Entnehmen.

Im vorliegenden Beispiel ist bei der sogenannten Duplex-Variante (Fig. 5) eine gespiegelte Anordnung von Bearbeitungsstationen (2a-2j) dargestellt. Selbstverständlich können die an den beiden Bearbeitungsstrecken verwendeten Bearbeitungsstationen auch unterschiedlicher Natur sein. Auch kann die als Bearbeitungsstrecke verwendete Rückführstrecke auch als Weiterführung der ersten Bearbeitungsstrecke verwendet werden.

## Patentansprüche

1. Fertigungssystem (1) zur Bearbeitung von im Wesentlichen plattenförmigen Werkstücken (40), die bevorzugt zumindest abschnittsweise aus Holz, Holzwerkstoffen, Kunststoff, Metallen oder einer Kombination hiervon bestehen, wobei das Fertigungssystem (1) aufweist:
zumindest zwei nebeneinander angeordnete Bearbeitungsstationen (2),
eine an einem Grundkörper (3) angebrachte Führungseinrichtung (31), die abschnittsweise in einer Längsrichtung entlang der Bearbeitungsstationen (2) verläuft, und eine umlaufende Führungstrecke ausbildet,
**dadurch gekennzeichnet, dass**
zumindest zwei an der Führungseinrichtung (31) geführte Greifeinrichtungen (32), wobei jede der Greifeinrichtungen (32) zur Aufnahme und zum Halten eines im Wesentlichen plattenförmigen Werkstücks (40) geeignet ist, vorgesehen sind, und dass
die Greifeinrichtungen (32) unabhängig voneinander bewegt werden können.

2. Fertigungssystem (1) gemäß Anspruch 1, bei dem die Greifeinrichtung (32) zwei in einer horizontalen Ebene angeordnete Greifzangen (32a, 32b) aufweist, die ein Werkstück (40) in einer Greifbewegung aufnehmen und halten können.

3. Fertigungssystem (1) gemäß Anspruch 1 oder 2, bei dem die Bearbeitungsstationen (2) austauschbar angeordnet sind.

4. Fertigungssystem (1) gemäß einem der vorangegangenen Ansprüche, bei dem eine berührungslose Energie- und Datenübertragung zu jeder der Greifeinrichtungen (32) vorhanden ist.

5. Fertigungssystem (1) gemäß einem der vorangegangenen Ansprüche, bei dem der Abstand zwischen den Greifeinrichtungen (32) variabel ist.

6. Fertigungssystem (1) gemäß einem der vorangegangenen Ansprüche, das weiter eine Beschickungs- und eine Entnahmestation (2a, 2j) in einer Längsrichtung der Führungseinrichtung (31) aufweist.

7. Fertigungssystem (1) gemäß einem der vorangegangenen Ansprüche, bei dem die Führungseinrichtung (31) eine Bearbeitungsstrecke und eine Rückführstrecke umfasst, die im Wesentlichen parallel zueinander angeordnet sind.

8. Fertigungssystem (1) gemäß Anspruch 7, bei dem die Rückführstrecke ebenfalls als eine Bearbeitungsstrecke ausgebildet ist.

9. Fertigungssystem (1) gemäß einem der vorangegangenen Ansprüche, bei dem die Greifeinrichtungen (32) mittels eines Linearmotors, eines Zahnriemens, eines Zahnstangengetriebes, oder eines Alternativantriebs angetrieben werden, um an der Führungseinrichtung (31) geführt zu werden.

10. Verfahren zur Förderung und Bearbeitung von im Wesentlichen plattenförmigen Werkstücken, die bevorzugt zumindest abschnittsweise aus Holz, Holzwerkstoffen, Kunststoff oder Metallen bestehen, wobei das Verfahren die nachfolgenden Schritte aufweist:
Aufnehmen eines ersten Werkstücks (40) mit einer ersten Greifeinrichtung (32) an einer Beschickungsstation (2a),
Fördern des ersten Werkstücks entlang einer Führungseinrichtung (31) zu einer ersten Bearbeitungsstation (2),
Bearbeiten des ersten Werkstücks in der ersten Bearbeitungsstation, dabei Aufnehmen eines weiteren Werkstücks mit einer weiteren Greifeinrichtung,
Fördern des ersten Werkstücks zu einer weiteren Bearbeitungsstation, dabei unabhängig hiervon Fördern des weiteren Werkstücks zu der ersten Bearbeitungsstation,
Nacheinander Ausfördern des ersten und des weiteren Werkstücks an einer Ausförderstation (2j), und
nach dem Ausfördern des jeweiligen Werkstücks: Führen der entsprechenden Greifeinrichtung entlang der als umlaufende Führungsstrecke ausgebildeten Führungseinrichtung (31) bei gleichbleibender Verfahrrichtung der Greifeinrichtung.

11. Verfahren gemäß Anspruch 10, **dadurch gekennzeichnet, dass** eine der Bearbeitungsstationen zumindest eine spanende Bearbeitung, eine Montagebearbeitung, eine Oberflächenvergütung, eine Qualitätskontrolle durchführen kann.

12. Verfahren gemäß einem der Ansprüche 10 oder 11, bei dem direkt nach dem Ausfördern eines Werkstücks aus einer Greifeinrichtung ein neues Werkstück beschickt wird.

13. Verfahren gemäß einem der Ansprüche 10 - 12, bei dem die Greifeinrichtung zwei Greifzangen (32a, 32b) aufweist, die ein Werkstück (40) mittels einer Greifbewegung in einer horizontalen Ebene aufnehmen.

## Claims

1. Manufacturing system (1) for processing essentially panel-like workpieces (40) which preferably consist at least in some sections of wood, wood materials, plastic, metals or a combination thereof, wherein the manufacturing system (1) has:
at least two processing stations (2) arranged next to one another,
a guide device (31) attached to a base body (3) and which runs in some sections in a longitudinal direction along the processing stations (2), and forms a circular guide path, **characterised in that**
at least two gripping devices (32) guided on the guide device (31), wherein each of the gripping devices (32) is suitable for receiving and for holding an essentially panel-like workpiece (40), are provided, and **in that** the gripping devices (32) may be moved independently of one another.

2. Manufacturing system (1) according to claim 1, in which the gripping device (32) has two gripping tongs (32a, 32b) arranged in a horizontal plane which may receive and hold a workpiece (40) in a gripping movement.

3. Manufacturing system (1) according to claim 1 or 2, in which the processing stations (2) are arranged to be exchangeable.

4. Manufacturing system (1) according to one of the preceding claims, in which contact-free energy and data transmission to each of the gripping devices (32) is present.

5. Manufacturing system (1) according to one of the preceding claims, in which the distance between the gripping devices (32) is variable.

6. Manufacturing system (1) according to one of the preceding claims, which also has a loading station and a removal station (2a, 2j) in a longitudinal direction of the guide device (31).

7. Manufacturing system (1) according to one of the preceding claims, in which the guide device (31) comprises a processing path and a return path which are arranged essentially parallel to one another.

8. Manufacturing system (1) according to claim 7, in which the return path is likewise formed as a processing path.

9. Manufacturing system (1) according to one of the preceding claims, in which the gripping devices (32) are driven by means of a linear motor, a toothed belt, a rack-and-pinion gear, or an alternative drive to be guided on the guide device (31).

10. Method for conveying and processing essentially panel-like workpieces which preferably consist at least in some sections of wood, wood materials, plastic or metals, wherein the method has the following steps:
receiving a first workpiece (40) with a first gripping device (32) at a loading station (2a),
conveying the first workpiece along a guide device (31) to a first processing station (2),
processing the first workpiece in the first processing station, thus receiving a further workpiece with a further gripping device,
conveying the first workpiece to a further processing station, thus independently thereof conveying the further workpiece to the first processing station,
one after another extracting the first and the second workpiece at an extracting station (2j), and
after extracting the particular workpiece: guiding the corresponding gripping device along the guide device (31) formed as a circular guide path with constant direction of movement of the gripping device.

11. Method according to claim 10, **characterised in that** one of the processing stations may carry out at least one cutting processing, assembly processing, surface refinement, quality control.

12. Method according to one of claims 10 or 11, in which directly after extracting a workpiece from a gripping device, a new workpiece is loaded.

13. Method according to one of claims 10 - 12, in which the gripping device has two gripping tongs (32a, 32b) which receive a workpiece (40) by means of a gripping movement in a horizontal plane.

## Revendications

1. Système de fabrication (1) pour l'usinage de pièces (40) globalement en forme de plaques qui sont constituées de préférence au moins par tronçons de bois, de matériaux dérivés du bois, de plastiques, de métaux ou d'une combinaison de ceux-ci, le système de fabrication (1) comportant :
- au moins deux postes d'usinage (2) disposés l'un à côté de l'autre,
- un dispositif de guidage (31) fixé sur un bâti (3), lequel dispositif de guidage s'étend par tronçons dans une direction longitudinale le long des postes d'usinage (2) et constitue une voie de guidage tournante,
**caractérisé**
- **en ce qu'**au moins deux dispositifs de préhension (32) guidés sur le dispositif de guidage (31) sont prévus, chacun des dispositifs de préhension (32) étant destiné à prendre et maintenir une pièce (40) globalement en forme de plaque
- et **en ce que** les dispositifs de préhension (32) peuvent être déplacés indépendamment les uns des autres.

2. Système de fabrication (1) selon la revendication 1, dans lequel le dispositif de préhension (32) comporte deux pinces de préhension (32a, 32b) qui sont disposées dans un plan horizontal et qui peuvent prendre et maintenir une pièce (40) dans un mouvement de préhension.

3. Système de fabrication (1) selon la revendication 1 ou 2, dans lequel les postes d'usinage (2) sont disposés de manière à pouvoir être échangés.

4. Système de fabrication (1) selon l'une des revendications précédentes, dans lequel une transmission d'énergie et de données sans contact est prévue vers chacun des dispositifs de préhension (32).

5. Système de fabrication (1) selon l'une des revendications précédentes, dans lequel la distance entre les dispositifs de préhension (32) est variable.

6. Système de fabrication (1) selon l'une des revendications précédentes, qui comporte aussi un poste de chargement (2a) et un poste d'enlèvement (2j) dans une direction longitudinale du dispositif de guidage (31).

7. Système de fabrication (1) selon l'une des revendications précédentes, dans lequel le dispositif de guidage (31) comprend une section d'usinage et une section de retour qui sont disposées globalement parallèles l'une à l'autre.

8. Système de fabrication (1) selon la revendication 7, dans lequel la section de retour est également conçue comme une section d'usinage.

9. Système de fabrication (1) selon l'une des revendications précédentes, dans lequel les dispositifs de préhension (32) sont entraînés au moyen d'un moteur linéaire, d'une courroie crantée, d'un engrenage à crémaillère ou d'un dispositif d'entraînement alternatif pour être guidés sur le dispositif de guidage (31).

10. Procédé de transport et d'usinage de pièces globalement en forme de plaques qui sont constituées de préférence au moins par tronçons de bois, de matériaux dérivés du bois, de plastiques ou de métaux, le procédé comprenant les étapes suivantes :
- saisir une première pièce (40) avec un premier dispositif de préhension (32) sur un poste de chargement (2a),
- transporter la première pièce le long d'un dispositif de guidage (31) vers un premier poste d'usinage (2),
- usiner la première pièce dans le premier poste d'usinage, ce faisant, saisir une autre pièce avec un autre dispositif de préhension,
- transporter la première pièce vers un autre poste d'usinage, ce faisant et indépendamment, transporter l'autre pièce vers le premier poste d'usinage,
- transporter la première pièce et de l'autre pièce l'une après l'autre vers un poste d'enlèvement (2j),
- après enlèvement de la pièce respective : guider le dispositif de préhension correspondant le long du dispositif de guidage (31) conçu comme voie de guidage tournante, la direction de déplacement du dispositif de préhension restant identique.

11. Procédé selon la revendication 10, **caractérisé en ce que** l'un des postes d'usinage peut réaliser au moins un enlèvement de copeaux, un montage, un traitement de surface, un contrôle de qualité.

12. Procédé selon l'une des revendications 10 ou 11, selon lequel, juste après l'enlèvement d'une pièce hors d'un dispositif de préhension, une nouvelle pièce est chargée.

13. Procédé selon l'une des revendications 10 à 12, selon lequel le dispositif de préhension comporte deux pinces de préhension (32a, 32b) qui prennent une pièce (40) au moyen d'un mouvement de préhension dans un plan horizontal.
